# EUROPÄISCHE PATENTSCHRIFT

(11) **EP 1 975 524 B1**
(45) Veröffentlichungstag und Bekanntmachung des Hinweises auf die Patenterteilung: **04.04.2018**
(21) Anmeldenummer: 08005232.7
(22) Anmeldetag: 20.03.2008
(51) Int. Cl.: F24H 1/38, F24H 8/00

(54) **Wärmeaustauscher für ein Brennwertheizgerät**
Heat exchanger for a condensing boiler
Echangeur thermique pour une chaudière à condensation

(30) Priorität: 30.03.2007 AT 5012007
(43) Veröffentlichungstag der Anmeldung: 01.10.2008
(73) Patentinhaber: Vaillant GmbH, 42859 Remscheid (DE)
(72) Erfinder: Bornscheuer, Walter, 35066 Frankenberg (DE); Jansen, Peter, 50670 Köln (DE); Thum, Lars, 40723 Hilden (DE)
(74) Vertreter: Hocker, Thomas

(56) Entgegenhaltungen:
- EP-A2- 0 166 437
- WO-A2-2008/004855
- DE-A1- 10 236 665
- DE-B- 1 102 368
- US-A- 3 052 220

## Beschreibung

Die Erfindung bezieht sich auf einen Wärmeaustauscher für ein Brennwertheizgerät.

In Brennwertwärmeaustauschern für Brennwertheizgeräte kondensiert Wasserdampf zu Kondensat. Dieses wird durch die Schwerkraft nach unten geleitet, gesammelt und abgeführt. Während die erste Generation der Brennwertgeräte häufig über konventionelle Wärmeaustauscher ohne Kondensation im Aufstrom und nachgeschaltete Kondensationswärmeaustauscher, in welchen die Abgas entgegen des Aufstroms geleitet wurden, verfügten, wurden in der zweiten Generation der Wärmeaustauscher für Brennwertgeräte die Brenner häufig als Sturzbrenner angeordnet und die Abgase demnach entgegen dem Aufstrom von oben nach unten geleitet, so dass Kondensat und Abgase in die gleiche Richtung geleitet wurden.

EP 166437 A2 zeigt einen Wärmetauscher für ein Brennwertheizgerät mit einem Gusswärmetauscher. Das kühlende liquide Medium wird dabei mäanderförmige geführt. Die Abgase eines Sturzbrenners werden nach unten durch den Wärmetauscher geleitet, gesammelt und über eine Abgasführung abgeführt, wobei das aus dem Abgas auskondensierte Kondensat über eine gesonderte Leitung abgeführt wird.

WO 2008/004855 A2 offenbart einen Wärmetauscher für einen brenngasbetriebenen Brenner eines Brennwertheizgerätes, bei welchem die Abgase zunächst nach unten und dann nach oben geleitet werden. Beide Wärmetauscherbereiche verfügen über Stifte zur Vergrößerung der Wärmeübergangsfläche und Reduktion des freien Querschnitts.

US 3052220 als nächstliegender Stand der Technik zeigt einen Dampfgenerator, bei dem heiße, strömene Gase an glatten Wärmetauscherwänden Wärme zur Verdampfung eines Fluids auf der anderen Seite der Wände abgeben.

Auch DE 10236665 A1 zeigt ein derartiges Brennwertheizgerät mit einem Wärmetauscher, der von oben nach unten von den Abgasen durchströmt wird.

Nachteilig bei derartigen Sturzbrennern mit Wärmeaustauscher, welche entgegen dem Aufstrom durchströmt werden, ist, dass nach Durchschreiten des Wärmeaustauschers die Abgase wieder am Wärmeaustauscher vorbei nach oben in eine Abgasabführung geleitet werden müssen.

Bei Kondensationswärmeaustauschern, welche im Aufstrom betrieben werden, besteht das Problem, dass das Kondensat in den heißen Abgasstrom zurückfließt und aufgrund der dort herrschenden hohen Abgastemperaturen zurückverdampft. Hierdurch ist es nicht möglich, die Kondensationswärme effektiv zu nutzen. Andererseits wird hierdurch die Kondensatkonzentration im Wärmeaustauscher erhöht, was deshalb problematisch ist, da das Kondensat nicht pH-neutral ist, und somit das Korrosionsrisiko im Wärmeaustauscher steigt. Des Weiteren kann es sowohl zum Auftreten von erhöhten Druckverlusten durch Ansammlung erhöhter Mengen von Kondensat, als auch zu Strömungsgeräuschen durch das verwirbelnde Kondensat kommen.

Der Erfindung liegt die Aufgabe zugrunde, einen Wärmeaustauscher aus Guss für Brennwertheizgeräte zu schaffen, welche sich durch kompakte Bauweise und hohe Wirkungsgradnutzung bei gleichzeitig guter Kondensatabführung eignet.

Erfindungsgemäß wird dies gemäß den Merkmalen des unabhängigen Anspruchs 1 dadurch erreicht, dass die Abgase des Brenners im Wärmeaustauscher zunächst entgegen dem thermischen Auftrieb nach unten geleitet werden und anschließend nach einer Umlenkung in einem zweiten Teilbereich mit dem thermischen Auftrieb wieder nach oben geleitet werden. Der zweite Teilbereich des Wärmeaustauschers verfügt über zueinander parallele Rippen, welche zur Auftriebsrichtung schräg angeordnet sind. Die Rippen sind derart angeordnet, dass sie sich in vertikaler Richtung überlappen. Hierdurch kann Kondensat, welches von einer schrägen Rippe nach unten tropft, auf die nächste Rippe gelangen und wird von dieser wiederum schräg nach unten weitergeführt, bis das Kondensat an eine Seitenwand des zweiten Teilbereichs gelangt. An dieser Seitenwand befindet sich eine vertikale Kondensatführung, so dass in diesem Bereich das Kondensat nach unten fließen kann.

Vorteilhafte Ausgestaltungen ergeben sich aus den Unteransprüchen. In einer vorteilhaften Ausgestaltung verfügt der Wärmeaustauscher über einen äußeren Wassermantel und eine innenliegende Abgasführung. Hierdurch ist es besonders gut möglich, die Energie des Abgases auf das zu erhitzende Medium zu übertragen und die Abstrahlverluste gering zu halten.

Fallen die Rippen hierbei in Richtung des Wassermantels entgegen der Auftriebsrichtung ab, so wird das Kondensat an den Wassermantel geleitet, wodurch ein wiederverdampfen verhindert wird.

In vorteilhafter Ausgestaltung wird die Rücklaufleitung des Wärmeaustauschers mit dem zweiten Teilbereich in die Vorlaufleitung mit dem ersten Teilbereich verbunden, so dass Abgas- und Wasser bzw. sonstiges Kühlmedium in dem Wärmeaustauscher im Gegenstrom Wärme übertragen.

Wird die Kondensatführung an der Seitenwand zunächst mit dem Rücklauf verbunden und erst anschließend der Wärmetauscherkanal in Gegenstrom zum Abgas geführt, so wird effizient verhindert, dass das Abgas in der Kondensatführung wiederverdampft wird.

Die Erfindung wird nun anhand der Figuren detailliert erläutert. Hierbei zeigen
- Fig. 1: einen erfindungsgemäßen Wärmeaustauscher im Schnitt,
- Fig. 2: einen vertikalen Schnitt durch den zweiten Teilbereich des Wärmeaustauschers,
- Fig. 3: einen horizontalen Schnitt durch den zweiten Teilbereich des Wärmeaustauschers
- Fig. 4: nochmals einen äquivalenten Schnitt des Wärmeaustauschers zu Figur 1, in den jedoch die Wasserkanalführung eingezeichnet ist.

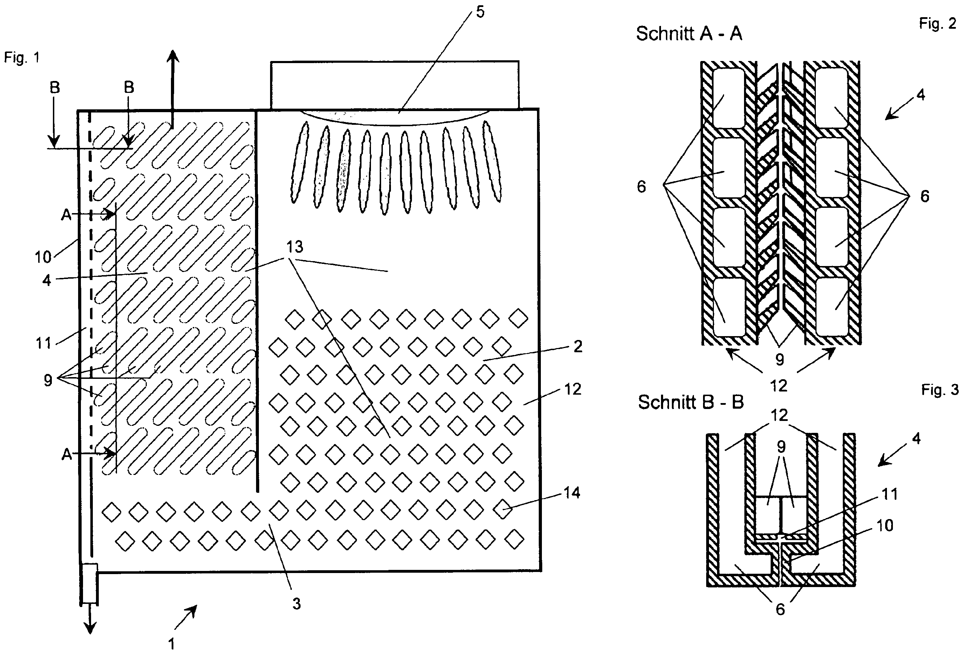

Figur 1 zeigt einen Wärmeaustauscher 1 aus Aluminiumguss für ein Brennwertheizgerät mit brennstoffbeheiztem Brenner 5, welcher als Sturzbrenner angeordnet ist. Unterhalb des Brenners 5 ist der erste Teilbereich 2 des Wärmeaustauschers 1 angeordnet. Neben dem ersten Teilbereich 2 des Wärmeaustauschers 1 ist ein zweiter Teilbereich 4 des Wärmeaustauschers 1 angeordnet. Zwischen dem ersten Teilbereich 2 und dem zweiten Teilbereich 4 befindet sich eine Umlenkung 3. Der erste Teilbereich 2, die Umlenkungen 3, der zweite Teilbereich 4 bilden die Abgasführung 13. Während im ersten Teilbereich in der Umlenkung 3 die Abgasführung 13 über Noppen 14 verfügt, sind im zweiten Teilbereich 4 schräge Rippen 9 angeordnet. In vorliegenden Fall verfügen die Rippen 9 über einen Winkel von 45° zur Aufstromrichtung. An der Seitenwand 10 des Wärmeaustauschers 1 befindet sich eine Kondensatabführung 11.

Figur 2 zeigt den vertikalen Teilschnitt durch den zweiten Teilbereich 4 des Wärmeaustauschers 1. Der Wärmeaustauscher 1 besteht aus zwei Wassermänteln 12, in denen sich wasserführende Kanäle 6 befinden. Dazwischen befindet sich die Abgasführung mit den Rippen 9, welche schräg zum Auftrieb angeordnet sind.

Figur 3 zeigt einen horizontalen Schnitt durch den zweiten Teilbereich 4 des Wärmeaustauschers1. Es ist zu erkennen, dass die schrägen Rippen 9 an der Wand 10 in eine Kondensatführung 11 münden.

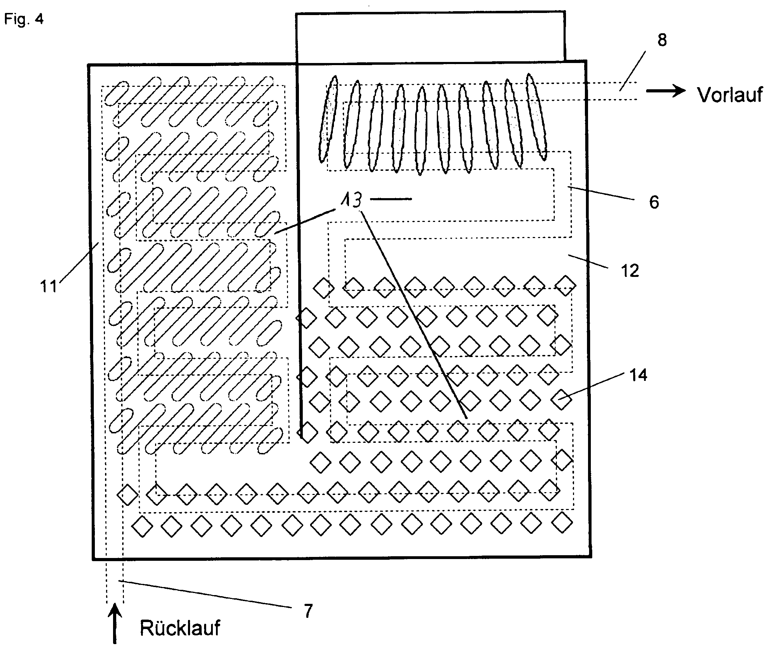

Figur 4 zeigt, dass die Rücklaufleitung 7 zunächst hinter der Kondensatführung 11 im Wassermantel 12 läuft. Anschließend läuft der wasserführende Kanal 6 mäanderförmig im Gegenstrom zur Abgasführung 13.

Im Betrieb werden im Brenner 5 Kohlenwasserstoffe mit Luft verbrannt, wodurch Kohlendioxyd CO₂ und Wasserdampf H₂O entsteht. Die Abgase durchströmen zunächst den ersten Teilbereich 2 des Wärmeaustauschers 1 und geben hierbei Wärme auf den Wasserkanal 6 des Wassermantels 12 ab. Hierbei findet jedoch noch keine Kondensation statt. Die abgekühlten, aber heißen Abgase gelangen durch die Umlenkung 3 in den zweiten Teilbereich 4 des Wärmeaustauschers 1 und werden nun mit dem thermischen Auftrieb nach oben geleitet. Das Abgas wird weiter abgekühlt. Bei Unterschreitung des Taupunkts wird Wasserdampf zu Wassertropfen abgekühlt. Die Wassertropfen sammeln sich auf der oberen Schräge der Rippen 9 und werden durch die Schwerkraft nach unten geleitet. Sind die Kondensattropfen am unteren Ende einer Rippe 9 angelangt, so tropfen sie nach unten, auf die darunter liegende Rippe 9 und werden von dieser wiederum nach unten zur Seite geleitet, bis letztendlich das Kondensat in die Kondensatführung 11 an der Seitenwand 10 gelangt. Von dort wird das Kondensat nach unten in einen nicht dargestellten Siphon geleitet.

## Patentansprüche

1. Wärmeaustauscher (1) in Gussform für ein Brennwertheizgerät mit brennstoffbeheiztem Brenner (5), bei der das zu erhitzende Medium in Kanälen (6) und das Abgas des Brenners (5) in einer Abgasführung (13) geführt werden, die Abgasführung (13) des Brenners (5) im Wärmeaustauscher (1) in einem ersten Teilbereich (2) zunächst entgegen dem thermischen Auftrieb nach unten und nach einer Umlenkung (3) in einem zweiten Teilbereich (4) des Wärmeaustauschers (1) mit dem thermischen Auftrieb nach oben führt, **dadurch gekennzeichnet, dass** die Abgasführung (13) im zweiten Teilbereich (4) über zur Auftriebsrichtung schräge, zueinander parallele Rippen (9) verfügt, wobei sich in vertikaler Richtung benachbarte Rippen (9) überlappen und an der Seitenwand (10) des zweiten Teilbereichs (4), an der die schrägen Rippen (9) nach unten weisen, eine vertikale Kondensatführung (11) angeordnet ist.

2. Wärmeaustauscher (1) für ein Brennwertheizgerät nach Anspruch 1, **dadurch gekennzeichnet, dass** der Wärmeaustauscher (1) über einen äußeren Wassermantel (12) mit innen liegender Abgasführung (13) verfügt.

3. Wärmeaustauscher (1) für ein Brennwertheizgerät nach Anspruch 2, **dadurch gekennzeichnet, dass** die Rippen (9) in Richtung Wassermantel (12) entgegen der Auftriebsrichtung abfallen.

4. Wärmeaustauscher (1) für ein Brennwertheizgerät nach einem der Ansprüche 1 bis 3, **dadurch gekennzeichnet, dass** die Rücklaufleitung (7) des Wärmeaustauschers (1) mit dem zweiten Teilbereich (4) und die Vorlaufleitung mit dem ersten Teilbereich (2) verbunden sind, wobei die Strömungsrichtung von der Rücklaufleitung (7) zur Vorlauflaufleitung (8) im Gegenstrom zur Abgasführung (13) erfolgt.

5. Wärmeaustauscher (1) für ein Brennwertheizgerät nach einem der Ansprüche 1 bis 3, **dadurch gekennzeichnet, dass** die Rücklaufleitung (7) des Wärmeaustauschers (1) mit dem zweiten Teilbereich (4) und die Vorlaufleitung mit dem ersten Teilbereich (2) verbunden sind, wobei die Strömungsrichtung von der Rücklaufleitung (7) zur Vorlauflaufleitung (8) zunächst parallel entgegen der vertikale Kondensatführung (11) und anschließend im Gegenstrom zur Abgasführung (13) erfolgt.

## Claims

1. Heat exchanger (1) in a mould for a condensing boiler having a burner (5) heated by fuel, in the case of which the medium to be heated is guided in channels (6) and the exhaust gas of the burner (5) is guided in an exhaust gas duct (13), the exhaust gas duct (13) of the burner (5) in the heat exchanger (1) firstly guides downwards against the thermal lift in a first partial region (2) and, after a redirection (3), guides upwards with the thermal lift in a second partial region (4) of the heat exchanger (1), **characterised in that,** in the second partial region (4), the exhaust gas duct (13) has ribs (9) which are at an angle to the lift direction and are in parallel to one another, wherein ribs (9) which are adjacent in the vertical direction overlap and a vertical condensate duct (11) is arranged on the side wall (10) of the second partial region (4) at which the angled ribs (9) point downwards.

2. Heat exchanger (1) for a condensing boiler according to claim 1, **characterised in that** the heat exchanger (1) has an outer water jacket (12) with an inner exhaust gas duct (13).

3. Heat exchanger (1) for a condensing boiler according to claim 2, **characterised in that** the ribs (9) slope in the direction of the water jacker (12) against the lift direction.

4. Heat exchanger (1) for a condensing boiler according to any one of claims 1 to 3, **characterised in that** the return pipe (7) of the heater exchanger (1) is connected to the second partial region (4) and the feed pipe is connected to the first partial region (2), wherein the flow direction occurs from the return pipe (7) to the feed pipe (8) in counter flow to the exhaust gas duct (13).

5. Heat exchanger (1) for a condensing boiler according to any one of claims 1 to 3, **characterised in that** the return pipe (7) of the heat exchanger (1) is connected to the second partial region (4) and the feed pipe is connected to the first partial region (2), wherein the flow direction occurs from the return pipe (7) to the feed pipe (8) firstly in parallel against the vertical condensate duct (11) and then in counter flow to the exhaust gas duct (13).

## Revendications

1. Echangeur de chaleur (1) dans un moule pour un appareil de chauffage à condensation avec un brûleur (5) chauffé par combustible, pour lequel l'agent à chauffer est guidé dans des canaux (6) et les gaz d'échappement du brûleur (5) sont guidés dans un guidage de gaz d'échappement (13), le guidage de gaz d'échappement (13) du brûleur (5) dans l'échangeur de chaleur (1) guide vers le bas dans une première zone partielle (2) tout d'abord à l'encontre de la portance thermique et guide vers le haut après une déviation (3) dans une seconde zone partielle (4) de l'échangeur de chaleur (1) avec la portance thermique, **caractérisé en ce que** le guidage de gaz d'échappement (13) dispose dans la seconde zone partielle (4) de nervures (9) parallèles entre elles, obliques par rapport au sens de portance, dans lequel des nervures (9) contiguës dans le sens vertical se chevauchent et sur la paroi latérale (10) de la seconde zone partielle (4) sur laquelle les nervures obliques (9) sont dirigées vers le bas, un guidage de condensat (11) vertical est agencé.

2. Echangeur de chaleur (1) pour un appareil de chauffage à condensation selon la revendication 1, **caractérisé en ce que** l'échangeur de chaleur (1) dispose d'une chemise d'eau (12) extérieure avec guidage de gaz d'échappement (13) intérieur.

3. Echangeur de chaleur (1) pour un appareil de chauffage à condensation selon la revendication 2, **caractérisé en ce que** les nervures (9) diminuent en direction de la chemise d'eau (12) à l'encontre du sens de portance.

4. Echangeur de chaleur (1) pour un appareil de chauffage à condensation selon l'une quelconque des revendications 1 à 3, **caractérisé en ce que** la conduite de retour (7) de l'échangeur de chaleur (1) est raccordée à la seconde zone partielle (4) et la conduite montante est raccordée à la première zone partielle (2), dans lequel le sens d'écoulement est effectué de la conduite de retour (7) à la conduite montante (8) en courant contraire au guidage de gaz d'échappement (13).

5. Echangeur de chaleur (1) pour un appareil de chauffage à condensation selon l'une quelconque des revendications 1 à 3, **caractérisé en ce que** la conduite de retour (7) de l'échangeur de chaleur (1) est raccordée à la seconde zone partielle (4) et la conduite montante est raccordée à la première zone partielle (2), dans lequel le sens d'écoulement est effectué de la conduite de retour (7) à la conduite montante (8) tout d'abord parallèlement à l'encontre du guidage de condensat (11) vertical et ensuite en courant contraire au guidage de gaz d'échappement (13).
